# EUROPÄISCHE PATENTSCHRIFT

(11) **EP 0 432 593 B1**
(45) Veröffentlichungstag und Bekanntmachung des Hinweises auf die Patenterteilung: **18.11.1993**
(21) Anmeldenummer: 90123024.3
(22) Anmeldetag: 01.12.1990
(51) Int. Cl.: B65B 65/02, B65G 23/34

(54) **Gurtförderer für eine Verpackungsmaschine**
Belt conveyor for a packaging machine
Convoyeur à courroie pour machine d'emballage

(30) Priorität: 09.12.1989 DE 3940791
(43) Veröffentlichungstag der Anmeldung: 19.06.1991
(73) Patentinhaber: Maschinenfabrik Alfred Schmermund, D-58263 Gevelsberg (DE)
(72) Erfinder: Demny, Helmut, W-5820 Gevelsberg (DE)
(74) Vertreter: Sparing Röhl Henseler Patentanwälte

(56) Entgegenhaltungen:
- DE-A- 2 036 569

## Beschreibung

Die Erfindung betrifft einen Gurtförderer für eine Verpackungs-, insbesondere eine Zigarettenverpackungsmaschine, dessen Gurt in äquidistanten Abständen Zellen trägt und um zwei Räder geführt ist, von denen eines über eine Antriebswelle antreibbar ist.

Bekannte Gurtförderer an Zigarettenverpackungsmaschinen besitzen Zellen, die an dem Gurt des Förderers äquidistant befestigt sind und einen quaderförmigen Aufnahmeraum aufweisen, um einen Zigarettenblock, ein Innenpaket, d.h. einen mit Innenpapier umhüllten Zigarettenblock, o.dgl. aufzunehmen. Der Gurt ist hierbei um zwei mit Abstand zueinander angeordnete, koaxiale Räder geführt, von denen eines über eine Antriebswelle schrittweise um eine oder mehrere Zellenteilungen oder kontinuierlich antreibbar ist. Im Bereich des Ober- und Untertrums des Gurtes werden die Zellen in Schienen geführt und im Umlenkungsbereich durch die Räder, die mit entsprechenden Ausnehmungen am Umfang versehen sind, übernommen. Durch den Antrieb mittels eines Antriebsrades wird der Gurt ungleichmäßig beansprucht, nämlich in Transportrichtung vor dem Antriebsrad auf Zug und nach dem Antriebsrad auf Druck. Bei den kurzen Taktzeiten und bei größeren Gurtlängen, die beide bei Zigarettenverpackungsmaschinen üblich sind, kann sich dies nachteilig beispielsweise auf die Positionierung der Zellen in Übergabestationen von bzw. zu anderen Förderern auswirken.

Ferner ist aus der DE-A-2 036 569 eine Fördervorrichtung für eine Verpackungsanlage bekannt, bei der eine Förderkette um ein erstes kontinuierlich und ein zweites schrittweise angetriebene Umlenkrad geführt ist. Hierbei wird während jedes Stillstandes des zweiten Umlenkrades die Förderkette ungleichmäßig beansprucht, was zu den einem Antrieb mit einem Antriebsrad vergleichbaren Nachteilen führt. Zudem treten durch das schrittweise angetriebene Umlenkrad verursachte Spannungsspitzen in der Förderkette auf, die durch federvorgespannte Umlenkräder vermindert werden müssen.

Aufgabe der Erfindung ist es daher, einen Gurtförderer der eingangs genannten Art zu schaffen, bei dem eine möglichst gleichmäßige Beanspruchung des Gurtes sichergestellt ist.

Diese Aufgabe wird dadurch gelöst, daß die Antriebswelle über wenigstens eine drehfeste Kardanverbindung mit einer Antriebswelle für das andere Rad gekoppelt ist.

Hierdurch wird erreicht, daß jeweils ein Antriebsrad den Ober- und den Untertrum des Gurtes auf Zug bzw. auf Druck belastet, während das andere Antriebsrad den Ober- und Untertrum auf Druck bzw. auf Zug, also entgegenwirkend belastet.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1 zeigt in schematischer Draufsicht und teilweise geschnitten einen Gurtförderer für eine Zigarettenverpackungsmaschine.

Fig. 2a zeigt teilweise schematisiert und ausschnittweise eine Ansicht X von Fig. 1.

Fig. 2b zeigt ausschnittweise eine Frontansicht des Antriebsrades von Fig. 2a.

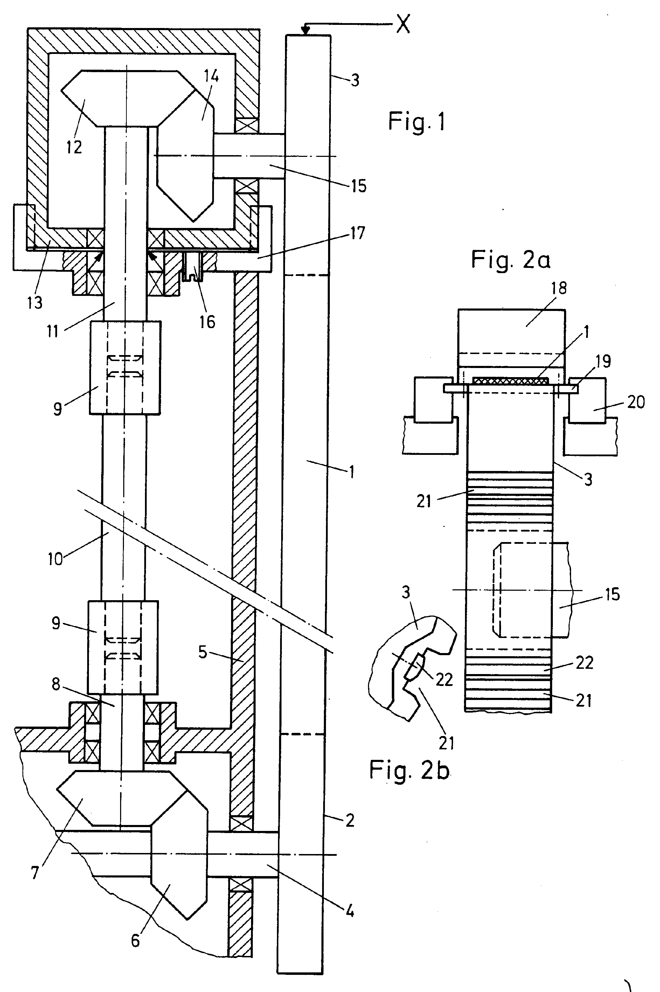

Fig. 1 zeigt schematisch einen Gurtförderer mit einem in äquidistanten Abständen Zellen tragenden Gurt 1, der um zwei Förderräder 2, 3 verläuft. Ein Förderrad 2 wird direkt über eine Antriebswelle 4 angetrieben, die in einem Getriebekasten 5 gelagert ist und ein Kegelrad 6 trägt. Das Kegelrad 6 steht mit einem weiteren Kegelrad 7 in Eingriff, das seinerseits mit einer Welle 8 verbunden ist, die ebenfalls im Getriebekasten 5 gelagert ist. Die Welle 8 ist über eine Hülse 9 mit einer sich parallel zur Längsachse des Gurtförderes erstreckenden Kardanwelle 10 gekoppelt, d.h. die Wellen 8 und 10 sind über eine Kardanverbindung gekoppelt, die bezüglich Drehung, Neigung und Fluchtung starr, jedoch hinsichtlich Abstand beweglich ist.

Die Kardanwelle 10 ist über eine weitere, entsprechend ausgebildete Kardanverbindung, d.h. eine weitere Hülse 9, mit einer Welle 11 gekoppelt, die am freien Ende ein Kegelrad 12 trägt, das in einem vom Getriebekasten 5 getrennt ausgebildeten Kasten 13 angeordnet ist und dort mit einem Kegelrad 14 in Eingriff steht, das seinerseits über eine Welle 15 mit dem Förderrad 3 verbunden ist. Der Kasten 13 ist gegenüber dem Getriebekasten 5 in Axialrichtung der Kardanwelle 10 über eine Stellschraube 16 o.dgl. zum Spannen des Gurtes 1 verstellbar und zu diesem Zweck in Axialrichtung der Kardanwelle 10 durch eine Führung 17 geführt.

Wie sich aus den Fig. 2a und 2b ergibt, sind an dem Gurt 1 Zellen 18 befestigt, die im dargestellten Ausführungsbeispiel quer zur Transportrichtung und außenseitig offen sind. Der Gurt 1 wird hierbei von einer bodenseitigen, dem Antriebsrad 3 zugewandten Ausnehmung der Zelle 18 aufgenommen und in diese durch eine mit der Bodenseite der Zelle 18 verschraubte, sich in Axialrichtung der koaxialen Antriebswellen 4, 15 erstreckende Fußleiste 19 eingeklemmt. Die Fußleiste 19 ragt seitlich in Führungsnuten von Führungschienen 20, die sich längs des Ober- und des Untertrums des Gurtförderers erstrecken (in Fig. 1 nicht dargestellt). Das Antriebsrad 3 besitzt am Umfang Ausnehmungen 21, die entsprechend der Zellenteilung angeordnet sind und im Umlenkbereich des Gurtes 1 zur Aufnahme der Fußleisten 19 dienen, wodurch die Antriebsbewegung übertragen wird. Am Boden der Ausnehmungen 21 befindet sich jeweils eine auswechselbare, sich in Axialrichtung der Antriebswelle 15 erstreckende Verschleißleiste 22. Das Antriebsrad 2 ist entsprechend ausgebildet.

## Patentansprüche

1. Gurtförderer für eine Verpackungs-, insbesondere eine Zigarettenverpackungsmaschine, dessen Gurt (1) in äquidistanten Abständen Zellen (18) trägt und um zwei Räder (2, 3) geführt ist, von denen eines über eine Antriebswelle (4) antreibbar ist, dadurch **gekennzeichnet,** daß die Antriebswelle (4) über wenigstens eine drehfeste Kardanverbindung (9) mit einer Antriebswelle (15) für das andere Rad (3) gekoppelt ist.

2. Gurtförderer nach Anspruch 1, dadurch gekennzeichnet, daß die Antriebswellen (4, 15) Kegelräder (6, 14) tragen, die mit Kegelrädern (7, 12) der Kardanverbindung (9) in Eingriff stehen.

3. Gurtförderer nach Anspruch 1 oder 2, dadurch gekennzeichnet, daß zwischen den Antriebswellen (4, 15) zwei eine Kardanwelle (10) aufnehmende Kardanverbindungen (9) vorgesehen sind.

4. Gurtförderer nach einem der Ansprüche 1 bis 3, dadurch gekennzeichnet, daß die Zellen (18) Fußleisten (19) aufweisen, die im Bereich des Ober- und Untertrums des Gurtes (1) in Führungsschienen (20) geführt und in den Umlenkbereichen der Räder (2, 3) von Ausnehmungen (21) am Umfang der Führungsräder (2, 3) aufgenommen sind.

5. Gurtförderer nach Anspruch 4, dadurch gekennzeichnet, daß am Boden der Ausnehmungen (21) auswechselbare Verschleißleisten (22) zum Abstützen der Fußleisten (19) vorgesehen sind.

## Claims

1. Belt conveyor for a packaging, especially a cigarette-packaging machine, the belt (1) of which carries cells (18) at equidistant intervals and is guided around two wheels, (2, 3), one of which is driveable via a drive shaft (4), characterized in that the drive shaft (4) is coupled to a drive shaft (15) for the other wheel (3) via at least one rotationally fixed cardan connection (9).

2. Belt conveyor according to Claim 1, characterized in that the drive shafts (4, 15) carry bevel wheels (6, 14) which are in engagement with bevel wheels, (7, 12) of the cardan connection (9).

3. Belt conveyor according to Claim 1 or 2, characterized in that two cardan connections (9) receiving a cardan shaft (10) are provided between the drive shafts (4, 15).

4. Belt conveyor according to one of Claims 1 to 3, characterized in that the cells (18) have base strips (19) which are guided in guide rails (20) in the region of the upper and lower strands of the belt (1) and which, in the deflection regions of the wheels (2, 3), are received by recesses (21) on the circumference of the guide wheels (2, 3).

5. Belt conveyor according to Claim 4, characterized in that exchangeable wearing strips (22) for supporting the base strip (19) are provided on the bottom of the recesses (21).

## Revendications

1. Transporteur à bande souple destiné à une machine d'emballage, particulièrement à cigarettes, dont la bande (1) est munie de cellules (18) équidistantes et passe autour de deux poulies (2,3) dont l'une peut être entraînée par un arbre moteur (4), caractérisé en ce que l'arbre moteur (4) est accouplé à un arbre moteur (15) destiné à l'autre poulie( 3) à l'aide d'au moins une liaison à la Cardan (9) rigide en rotation.

2. Transporteur à bande souple selon la revendication 1, caractérisé en ce que les arbres moteurs (4,15) sont munis de pignons coniques (6,14) en prise avec des pignons coniques (7,12) de la liaison à la Cardan (9).

3. Transporteur à bande souple selon la revendication 1 ou 2, caractérisé en ce qu'un arbre (10) muni de liaisons à la Cardan (9) est prévu entre les arbres moteurs (4,15).

4. Transporteur à bande souple selon l'une des revendications 1 à 3, caractérisé en ce que les cellules (18) comportent des barrettes (19) guidées dans la zone des brins supérieur et inférieur de la bande (1) dans des rails de guidage (20) et prises en charge dans les zones de changement de direction des poulies (2,3) par des creux (21) agencés à la périphérie des poulies de guidage (2,3).

5. Transporteur à bande souple selon la revendication 4, caractérisé en ce que des plaquettes d'usure (22) interchangeables sont prévues dans le fond des creux (21) pour supporter les barrettes (19).
